# FASCICULE DE BREVET EUROPEEN

(11) **EP 3 494 427 B1**
(45) Date de publication et mention de la délivrance du brevet: **26.05.2021**
(21) Numéro de dépôt: 17743065.9
(22) Date de dépôt: 31.07.2017
(51) Int. Cl.: G02B 6/44

(54) **FOURREAU À FIBRE OPTIQUE, CÂBLE COMPRENANT UN TEL FOURREAU ET PROCÉDÉ DE FABRICATION D'UN TEL FOURREAU**
GLASFASERHÜLSE, KABEL MIT SOLCH EINER HÜLSE, HÜLSE UND VERFAHREN ZUR HERSTELLUNG SOLCH EINER HÜLSE
OPTICAL FIBRE SLEEVE, CABLE COMPRISING SUCH A SLEEVE AND METHOD FOR PRODUCING SUCH A SLEEVE

(30) Priorité: 02.08.2016 FR 1657512
(43) Date de publication de la demande: 12.06.2019
(73) Titulaire: Silec Cable, 77876 Montereau Fault Yonne (FR)
(72) Inventeur: FICQUENET, Marjorie, 77127 Lieusaint (FR); PRANGE, Mathieu, 77130 Mntereau-Fault-Yonne (FR); LECOURTIER, Nathalie, 89340 Villeblevin (FR); JAMET, Patrick, 89340 Villeneuve-La-Guyard (FR); RESCAN, Pierre-Emmanuel, 77130 Fontainebleau (FR); LEVIGOUREUX, Sophie, 91800 Brunoy (FR)
(74) Mandataire: Decorchemont, Audrey Véronique Christèle
(86) Numéro de dépôt international: PCT/EP2017/069294
(87) Numéro de publication internationale: WO 2018/024664

(56) Documents cités:
- EP-A1- 1 345 058
- FR-A1- 2 865 044
- US-B1- 8 923 675

## Description

### Etat de la technique

La fibre optique est très utilisée dans les réseaux de communication électronique notamment parce que le débit d'informations qu'il est possible de faire transiter via une fibre optique est quasi-indépendant de la distance parcourue par l'information alors que le débit acheminé via des conducteurs en cuivre dépend de la longueur de ceux-ci. Les opérateurs en télécommunication cherchent donc à amener la fibre optique au plus près de l'utilisateur afin d'améliorer le débit disponible. Dans les bâtiments, une fibre optique est ainsi amenée auprès de chacun des utilisateurs. Généralement, toutes ces fibres sont regroupées dans des micromodules, eux-mêmes regroupés dans un unique câble.

Un micromodule est usuellement formé d'une enveloppe souple, étanche ou non, contenant une ou plusieurs fibres optiques, avec un maximum usuel de douze fibres par micromodule. Les micromodules contenus dans le câble sont repérés grâce à la couleur de l'enveloppe les entourant. Douze ou treize couleurs de repérage sont habituellement utilisées car elles permettent une identification aisée des micromodules, particulièrement sur des petits diamètres. Lorsque les micromodules d'un même câble sont en nombre supérieur à douze ou pour des demandes spécifiques de clients, il faut avoir recours à des combinaisons telles que l'alternance de couleurs sur une même enveloppe via l'utilisation d'un liseré longitudinal ou la réalisation d'anneaux colorés sur une même enveloppe.

En réalité, les micromodules servent seulement à regrouper les fibres optiques afin de faciliter leur manipulation et à les repérer plus facilement. De la sorte, un micromodule abîmé ou dégradé ponctuellement n'affecte pas le bon fonctionnement du câble en lui-même ou des fibres optiques contenues dans ledit micromodule.

Lorsque l'on souhaite connecter le réseau d'un utilisateur à une fibre du câble à micromodules, une fenêtre d'extraction est découpée dans la gaine extérieure du câble. Le micromodule contenant la fibre attribuée à l'utilisateur est identifié grâce à la couleur de son enveloppe et extrait sur une longueur pouvant aller jusqu'à quelques mètres. Le micromodule est ouvert et la fibre attribuée à l'utilisateur est extraite et reliée à son réseau par connexion à un point de branchement optique ou à un circuit cuivre via un convertisseur optique.

Pour ouvrir le micromodule, on pince généralement entre ses doigts légèrement l'enveloppe du micromodule et on exerce une traction dans l'axe du micromodule pour déchirer l'enveloppe.

Ceci impose toutefois d'utiliser un matériau d'enveloppe particulier afin que non seulement l'enveloppe puisse se déchirer facilement (pour ne pas avoir à exercer une traction trop importante qui endommagerait les fibres optiques contenues dans le micromodule) mais également que l'enveloppe ne s'allonge pas trop sous l'effet de la traction au risque sinon de venir serrer les fibres les unes contre les autres.

Pour pallier ces inconvénients, on peut aussi effectuer une découpe de l'enveloppe à l'aide d'un outil du type pince à dénuder et venir saisir une ou plusieurs fibres optiques contenues dans le micromodule avant de tirer directement sur cette ou ces fibres optiques pour ouvrir axialement l'enveloppe, la ou les fibres optiques servant alors de lignes de déchirement Le document WO 2013/087445 divulgue l'ouverture à l'aide d'un outil coupant d'une gaine de câble optique comprenant une strie.

Toutefois, ceci implique l'utilisation d'un outil coupant qui pourrait endommager les fibres optiques du fait de la très faible épaisseur de l'enveloppe. En outre, la ou les fibres optiques utilisées comme lignes de déchirement peut se trouver endommagées du fait des efforts exercés sur elles.

### Objet de l'invention

Un but de l'invention est de faciliter l'ouverture d'un fourreau à fibre optique, tel qu'un micromodule à fibre optique.

### Exposé de l'invention

A cet effet, on prévoit, selon l'invention, un fourreau s'étendant selon une direction axiale comprenant au moins une enveloppe et plusieurs fibres optiques agencées dans l'enveloppe, l'enveloppe comprenant au moins une empreinte laser formant localement une zone de fragilisation de l'enveloppe pour autoriser une ouverture de l'enveloppe au niveau de cette zone de fragilisation sans outil.

Ainsi, l'empreinte laser va diminuer localement l'épaisseur de l'enveloppe à son niveau, sans toutefois percer l'enveloppe, créant ainsi une zone de fragilisation vis-à-vis du reste de l'enveloppe. Il suffit donc simplement de tirer l'enveloppe au niveau de l'empreinte pour déchirer l'enveloppe au niveau de la zone de fragilisation, zone plus sensible aux contraintes extérieures.

On accède ainsi plus facilement à la fibre optique agencée dans le fourreau.

De la sorte, l'enveloppe n'a pas nécessairement besoin d'être dans un matériau particulier pour que l'ouverture s'effectue aisément sans ou avec très peu de risques pour la fibre optique contenue dans le fourreau.

L'ouverture de l'enveloppe se fait donc manuellement et sans outil.

De façon avantageuse, la découpe de l'enveloppe au niveau de la zone de fragilisation se fait de façon bien nette. L'ouverture de l'enveloppe ainsi créée comporte donc des bords nets. Ceci facilite notamment le travail effectué derrière par un opérateur sur les fourreaux.

On note que l'empreinte laser est créée de sorte à volontairement diminuer l'épaisseur de l'enveloppe pour la fragiliser sans toutefois que l'empreinte laser ne traverse toute l'enveloppe. L'empreinte laser est en outre conformée de sorte à pouvoir être tirée par un utilisateur pour ouvrir l'enveloppe.

Selon un mode de réalisation particulier, l'empreinte laser est conformée de sorte à former un repère d'identification du fourreau.

On tire ainsi avantageusement profit de l'empreinte du fourreau pour créer à la fois une zone de fragilisation et à la fois un repérage dédié du fourreau considéré ce qui peut s'avérer nécessaire lorsque le fourreau est associé à d'autres fourreaux dans un câble.

Par « repère d'identification », on entend au sens de la présente invention, tout signe distinctif créé volontairement sur l'enveloppe pour distinguer le fourreau considéré d'autres fourreaux. Ceci peut donc être une figure géométrique, un symbole, une lettre, un chiffre ...

Selon un mode de réalisation particulier, l'empreinte présente une hauteur égale à au moins 30% de l'épaisseur de l'enveloppe.

Selon un mode de réalisation particulier, l'empreinte présente une hauteur égale entre 30% et 70% de l'épaisseur de l'enveloppe et de préférence entre 30% et 60% de l'épaisseur de l'enveloppe, et encore plus préférentiellement entre 40 et 60% de l'épaisseur de l'enveloppe.

Selon un mode de réalisation particulier, l'enveloppe a une épaisseur inférieure à 0.5 millimètre.

Selon un mode de réalisation particulier, l'enveloppe a une épaisseur comprise entre 0.01 et 0.5 millimètre.

Selon un mode de réalisation particulier, l'empreinte laser est reproduite au moins une fois à l'identique le long de la direction axiale (X) sur le fourreau à une distance prédéterminée de la première empreinte laser.

Selon un mode de réalisation particulier, le fourreau comprend au moins une première empreinte laser formant une zone de fragilisation de l'enveloppe pour autoriser une ouverture de l'enveloppe au niveau de cette zone de fragilisation sans outil et une deuxième empreinte laser, différente de la première empreinte, formant une zone de fragilisation de l'enveloppe pour autoriser une ouverture de l'enveloppe au niveau de cette zone de fragilisation sans outil, la première empreinte et la deuxième empreinte étant séparée l'une de l'autre selon la direction axiale par une distance prédéterminée.

Selon un mode de réalisation particulier chaque empreinte est séparée de l'autre selon la direction axiale par une distance comprise entre 0.01 centimètre et 1.5 mètres.

Selon un mode de réalisation particulier l'enveloppe est choisie de sorte qu'elle change de couleur lorsqu'elle est soumise à un rayonnement du laser.

Selon un mode de réalisation particulier, le fourreau est un micromodule.

L'invention concerne également un câble comprenant une gaine extérieure et au moins un fourreau tel que précédemment décrit agencé à l'intérieur de la gaine extérieure.

L'invention concerne également un procédé de fabrication d'un fourreau tel que précédemment décrit, comportant une étape d'extrusion d'une composition pour former l'enveloppe et une étape de marquage laser de l'enveloppe pour créer l'empreinte laser.

Selon un mode de réalisation particulier, on vient marquer l'enveloppe au laser immédiatement après l'étape d'extrusion.

Selon un mode de réalisation particulier, la composition comporte un composant réactif au rayonnement laser.

D'autres caractéristiques et avantages de l'invention ressortiront à la lecture de la description qui suit de modes de réalisation particuliers non limitatifs de l'invention.

### Brève description des figures

Il sera fait référence aux figures annexées, parmi lesquelles :
- la figure 1 est une vue schématique d'un fourreau selon un premier mode de réalisation de l'invention,
- la figure 2 est une vue schématique de la section transversale d'un câble comprenant le fourreau illustré à la figure 1,
- la figure 3 est une vue schématique d'un fourreau selon un deuxième mode de réalisation de l'invention,
- la figure 4 est une vue schématique de trois fourreaux selon un troisième mode de réalisation de l'invention.

### Description détaillée de l'invention

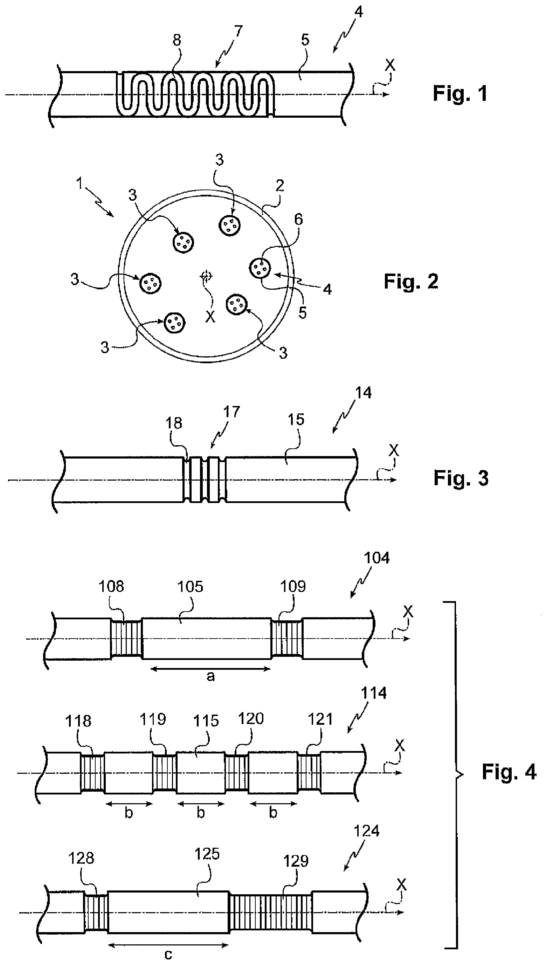

En référence aux figures 1 à 2, selon le premier mode de réalisation, le câble, généralement désigné 1, comporte une gaine extérieure tubulaire 2 et plusieurs micromodules 3, 4 extractibles du câble agencés dans la gaine extérieure tubulaire 2. Le câble 1 et les micromodules 3, 4 s'étendent tous selon une direction axiale X. Un tel câble peut être utilisé par exemple pour toute application de transmission de données et de télécommunication.

Chaque micromodule 3, 4 est ici formé d'une enveloppe 5 (une seule enveloppe étant référencée ici) souple, étanche ou non, contenant une ou plusieurs fibres optiques 6 (une seule fibre optique étant référencée ici). De préférence, chaque micromodule 3, 4 comporte un maximum de douze fibres par micromodule.

L'enveloppe 5 a typiquement une épaisseur inférieure à 0.5 millimètre. De préférence, l'enveloppe 5 a une épaisseur comprise entre 0.01 et 0.5 millimètre. De préférence encore, l'enveloppe 5 a une épaisseur comprise entre 0.05 et 0.15 millimètre.

L'un de ces micromodules 4 au moins comporte une empreinte laser 7 formant localement une zone de fragilisation de l'enveloppe 5. Ceci permet de faciliter davantage l'ouverture de l'enveloppe 5 au niveau de cette zone de fragilisation sans outil.

De préférence, l'empreinte laser 7 est conformée de sorte à former un repère d'identification du micromodule 4.

L'enveloppe 5 est choisie de sorte qu'elle change de couleur lorsqu'elle est soumise au rayonnement du laser. A cet effet, un composant réactif au rayonnement laser est par exemple incorporé dans la composition qui sera extrudée pour la fabrication de l'enveloppe 5.

De la sorte, l'empreinte laser 7 est visible non seulement de par sa forme mais également de par sa couleur qui est donc différente de celle du reste de l'enveloppe 7 et ce grâce à l'emploi d'un seul outil qu'est le laser.

Comme plus visible à la figure 2, cette empreinte laser 7 comporte ici un seul motif 8. Ce seul motif 8 est ici composé d'un trait unique. De façon particulière, ledit trait forme un zigzag s'étendant de manière générale selon l'axe X sur l'enveloppe 5. La forme en zigzag facilite en outre le déchirement de l'enveloppe 5 à ce niveau.

L'empreinte laser 7 est ici telle qu'elle présente une hauteur d'au moins 30% de l'épaisseur de l'enveloppe 5. L'empreinte laser 7 est typiquement telle qu'elle présente une hauteur comprise entre 30 et 60 % de l'épaisseur totale de l'enveloppe 5 (c'est-à-dire qu'au niveau de l'empreinte laser 7, entre 40 à 70% de l'épaisseur de l'enveloppe 5 est détruite par le rayonnement laser lors de la création de l'empreinte laser 7). L'empreinte laser 7 a par exemple une hauteur comprise entre 0.03 et 0.08 millimètre.

De la sorte, au niveau de l'empreinte laser 7, l'enveloppe 5 a une épaisseur comprise entre 40% et 70% de l'épaisseur du reste de l'enveloppe 5 ce qui facilite le déchirement de l'enveloppe 5 à ce niveau.

De préférence, cette empreinte laser 7 est ici reproduite à l'identique à intervalles réguliers le long de l'axe X sur le micromodule 4. De la sorte, lorsque la gaine 2 du câble 1 est ouverte à un endroit quelconque, une empreinte du micromodule 4 demeure toujours sensiblement proche de l'ouverture de la gaine 2 ce qui facilite en particulier le repérage du micromodule 4 du fait qu'ici l'empreinte laser 7 soit aussi conformée en un repère d'identification.

Typiquement chaque empreinte 8 est séparée de l'autre par une distance (selon l'axe X) comprise entre 0.01 centimètre et 1.5 mètres et de préférence d'environ 6 centimètres.

Un procédé de fabrication du micromodule 4 va être à présent décrit.

L'enveloppe 5 du micromodule 4 est fabriquée de façon connue en soi à partir d'une composition qui est extrudée, la composition étant mélangée avant d'être extrudée ou étant simultanément mélangée et extrudée.

Puis un marquage laser est appliqué sur l'enveloppe 5 pour y créer l'empreinte laser 7.

Le contrôle de la puissance du rayonnement laser émis permet de former l'empreinte laser 7 sur l'enveloppe 5 sans toutefois percer l'enveloppe 5.

De préférence, on vient marquer au laser l'enveloppe 5 immédiatement après son extrusion. Ici, le laser est agencé au niveau de la sortie de la ligne d'extrusion pour venir effectuer le marquage laser.

De la sorte, la création de l'empreinte laser 7 est effectuée directement sur la ligne d'extrusion. L'empreinte laser 7 est donc effectuée en dynamique au cours de la fabrication de l'enveloppe 5 (et non en statique une fois l'enveloppe 5 déjà créée et par exemple découpée).

On tire donc avantageusement profit de la ligne d'extrusion nécessaire à la création de l'enveloppe 5 pour y agencer directement en sortie le laser. Ceci permet d'effectuer plus rapidement les empreintes laser. Le laser peut par exemple fonctionner ainsi à 400 mètres par minutes.

De façon particulière, le laser utilisé est un laser à fibres.

Le laser est par exemple choisi de sorte à fonctionner avec une longueur d'onde comprise entre 1000 et 1100 nanomètres.

Le laser a par exemple une puissance comprise entre 20 et 100 watts.

En référence à la figure 3, et selon un deuxième mode de réalisation de l'invention, l'empreinte laser 17 formant un repère d'identification prend ici une autre forme que celle décrite en regard du premier mode de réalisation.

L'empreinte laser 17 comporte ainsi ici un motif 18 formé de trois traits distincts. Chaque trait forme par exemple un anneau entourant l'enveloppe 15 sur toute la circonférence de l'enveloppe 15.

En référence à la figure 4, et selon un troisième mode de réalisation, les empreintes laser formant un repère d'identification comportent ici un nombre différent de motifs que ceux décrits en regard du premier mode de réalisation et du deuxième mode de réalisation.

De façon particulière, le premier micromodule 104 comporte une empreinte laser comportant de façon successive (selon l'axe X) deux motifs 108, 109 séparés par une distance a (selon l'axe X). Ces motifs 108, 109 sont ici identiques. Chacun de ces motifs 108, 109 est formé d'une pluralité d'anneaux.

Le deuxième micromodule 114 comporte quant à lui une empreinte laser comprenant de façon successive (selon l'axe X) quatre motifs 118, 119, 120, 121 séparés entre eux par une distance b (selon l'axe X) qui est ici plus petite que la distance a. Ces motifs 118, 119, 120, 121 sont tous identiques entre eux. Chaque motif 118, 119, 120, 121 est formé d'une pluralité d'anneaux. Le nombre d'anneaux par motifs est ici inférieur au nombre d'anneaux par motifs du premier micromodule 114.

Le troisième micromodule 124 comporte quant à lui une empreinte laser comprenant de façon successive (selon l'axe X) deux motifs 128, 129 séparés par une distance c (selon l'axe X) encore supérieure aux distances a et b. Ces motifs 128, 129 sont différents. Chacun de ces motifs 128, 129 est formé d'une pluralité d'anneaux et un des motifs 129 comporte un nombre d'anneaux bien plus important que l'autre des motifs 128 et que celui des motifs du premier micromodule et du deuxième micromodule.

On peut ainsi repérer un micromodule non seulement au nombre de motifs formant l'empreinte laser mais également à la forme, aux dimensions, à la fréquence et à la couleur de ces motifs.

De nombreuses possibilités d'empreintes laser formant repères d'identification sont ainsi possibles. En outre, ces empreintes laser permettent de créer des zones de fragilisation simplifiant l'accès à l'intérieur du micromodule.

Bien entendu, l'invention n'est pas limitée aux modes de réalisation décrits mais englobe toute variante entrant dans le cadre de l'invention telle que définie par les revendications.

En particulier, bien qu'ici l'empreinte laser soit conformée en un repère d'identification, l'empreinte laser pourra être quelconque et par exemple identique pour tous les fourreaux contenus dans un même câble et former uniquement une zone de fragilisation sans identification particulière du fourreau associé.

En particulier, bien qu'ici le fourreau décrit soit un micromodule comprenant directement les différentes fibres optiques (c'est-à-dire sans contenant intermédiaire entre le micromodule et les fibres optiques), le fourreau pourra être tout type de contenant dans lequel s'étend une à plusieurs fibres optiques.

Le fourreau pourra ainsi être un tube en polytéréphtalate de butylène (PBT) comprenant directement les fibres optiques. Le fourreau pourra également être un étui intermédiaire renfermant plusieurs micromodules et/ou plusieurs tubes en PBT qui contiennent eux-mêmes directement les fibres optiques, une gaine externe entourant éventuellement l'étui intermédiaire avec d'autres éléments comme par exemple d'autres étuis intermédiaires. Un tel étui intermédiaire est parfois appelé « gaine de faisceau ». Le fourreau pourra également être une gaine externe renfermant plusieurs micromodules et/ou plusieurs tubes en PBT et/ou plusieurs gaines de faisceaux qui contiennent eux-mêmes les fibres optiques.

Par ailleurs, bien qu'ici l'enveloppe du fourreau soit colorée, l'enveloppe pourra ne pas être colorée. Le fourreau pourra comporter en outre au moins un marqueur ordinaire d'identification sous forme de traits colorés (anneau, trait axial ...) permettant une identification du fourreau sans pour autant créer une zone de fragilisation au niveau du marqueur même si l'empreinte laser est déjà conformée en un repère d'identification.

Par ailleurs, le câble pourra comporter un autre nombre de fourreaux que ce qui a été indiqué. Le câble pourra ne comporter que des fourreaux selon l'invention ou un nombre moins important ou plus important de fourreaux complétés par des fourreaux selon l'invention. Le câble pourra ne comporter qu'un seul fourreau en tout et pour tout qui sera donc un fourreau selon l'invention.

Bien qu'ici, l'empreinte laser soit reproduite à l'identique à intervalles réguliers le long de l'axe du fourreau, le fourreau pourra comporter des empreintes laser différentes les unes des autres agencées à intervalles réguliers le long de l'axe du fourreau. La distance séparant deux empreintes consécutives (identiques ou non) pourra être identique ou différente le long de l'axe du fourreau. La distance séparant deux empreintes consécutives (identiques ou non) pourra être prédéterminée afin qu'une empreinte laser soit accessible facilement sur tout le long du fourreau ou encore afin de donner une indication de la longueur du fourreau (par exemple deux empreintes étant toujours séparées d'un mètre) ou encore aider un opérateur à ouvrir le fourreau sur la bonne longueur (par exemple sur la longueur séparant deux empreintes laser successives).

L'empreinte laser pourra bien entendu être différente de ce qui a été décrit. Lorsque l'empreinte laser sera conformée en un repère d'identification, l'empreinte laser pourra ainsi être différente en termes de forme, de couleur, de dimensions, ou encore en termes de nombre de motifs, de dimensions, de forme, de couleur, de fréquence de motifs. On pourra également jouer sur la fréquence des empreintes elles-mêmes le long de l'axe X.

Bien qu'ici le laser utilisé soit un laser à fibres, le laser utilisé pourra être différent et par exemple comporter un laser à gaz comme un laser CO₂ ou encore un laser à cristal comme un laser Nd-YAG. Selon le type de laser utilisé et la composition du matériau de l'enveloppe, différentes réactions pourront ainsi avoir lieu : moussage, carbonisation ou ablation, entrainant différents types de contraste entre l'empreinte et le reste de l'enveloppe. Ce type de contraste obtenu pourra ou non être volontairement adapté en ajoutant un ou plusieurs additifs au matériau de l'enveloppe pour modifier sa réaction au laser. De plus, si plusieurs fourreaux du câble comportent des empreintes laser, on pourra choisir leurs enveloppes de sorte que l'empreinte laser présentera au final une couleur différente d'un fourreau à l'autre sous l'action d'un même laser.

## Revendications

1. Fourreau s'étendant selon une direction axiale (X) comprenant au moins une enveloppe (5 ; 15 ; 105, 115, 125) et au moins plusieurs fibres optiques agencées dans l'enveloppe, l'enveloppe comprenant au moins une empreinte laser (8 ; 18 ; 108, 109 ; 118, 119, 120, 121 ; 128, 129) formant localement une zone de fragilisation de l'enveloppe pour autoriser une ouverture de l'enveloppe au niveau de cette zone de fragilisation sans outil.

2. Fourreau selon la revendication 1, dans lequel l'empreinte laser (8 ; 18 ; 108, 109 ; 118, 119, 120, 121 ; 128, 129) est conformée de sorte à former un repère d'identification du fourreau.

3. Fourreau selon la revendication 1 ou la revendication 2, dans lequel l'empreinte présente une hauteur égale à au moins 30% de l'épaisseur de l'enveloppe (5; 15 ; 105, 115, 125).

4. Fourreau selon la revendication 2, dans lequel l'empreinte présente une hauteur égale entre 30% et 60% de l'épaisseur de l'enveloppe (5 ; 15 ; 105, 115, 125) .

5. Fourreau s'étendant selon l'une des revendications précédentes, dans lequel l'enveloppe (5 ; 15 ; 105, 115, 125) a une épaisseur inférieure à 0.5 millimètre.

6. Fourreau s'étendant selon la revendication précédente, dans lequel l'enveloppe (5) a une épaisseur comprise entre 0.01 et 0.5 millimètre.

7. Fourreau selon l'une des revendications précédentes, dans lequel l'empreinte laser (8 ; 18 ; 108, 109 ; 118, 119, 120, 121 ; 128, 129) est reproduite au moins une fois à l'identique le long de la direction axiale (X) sur le fourreau (4 ; 14 ; 104, 114, 124) à une distance prédéterminée de la première empreinte laser.

8. Fourreau selon l'une des revendications précédentes, comprenant au moins une première empreinte laser formant une zone de fragilisation de l'enveloppe pour autoriser une ouverture de l'enveloppe au niveau de cette zone de fragilisation sans outil et une deuxième empreinte laser, différente de la première empreinte, formant une zone de fragilisation de l'enveloppe pour autoriser une ouverture de l'enveloppe au niveau de cette zone de fragilisation sans outil, la première empreinte et la deuxième empreinte étant séparée l'une de l'autre selon la direction axiale par une distance prédéterminée.

9. Fourreau selon la revendication 7 ou la revendication 8, dans lequel chaque empreinte (8 ; 18 ; 108, 109 ; 118, 119, 120, 121 ; 128, 129) est séparée de l'autre selon la direction axiale par une distance comprise entre 0,01 et 1.5 mètres.

10. Fourreau selon l'une des revendications précédentes dans lequel l'enveloppe (5 ; 15 ; 105, 115, 125) est choisie de sorte qu'elle change de couleur lorsqu'elle est soumise à un rayonnement du laser.

11. Fourreau selon l'une des revendications précédentes, dans lequel le fourreau est un micromodule.

12. Câble comprenant une gaine extérieure (2) et au moins un fourreau (4 ; 14 ; 104, 114, 124) selon l'une des revendications précédentes agencé à l'intérieur de la gaine extérieure.

13. Procédé de fabrication d'un fourreau selon l'une des revendications 1 à 11, comportant une étape d'extrusion d'une composition pour former l'enveloppe (5 ; 15 ; 105, 115, 125) et une étape de marquage laser de l'enveloppe pour créer l'empreinte laser (8 ; 18 ; 108, 109 ; 118, 119, 120, 121 ; 128, 129).

14. Procédé de fabrication selon la revendication 13, dans lequel on vient marquer l'enveloppe (5 ; 15 ; 105, 115, 125) au laser immédiatement après l'étape d'extrusion.

15. Procédé de fabrication selon l'une des revendications 13 ou 14, dans lequel la composition comporte un composant réactif au rayonnement laser.

## Patentansprüche

1. Hülse, die sich in einer axialen Richtung (X) erstreckt und mindestens eine Umhüllung (5; 15; 105, 115, 125) und mindestens mehrere Glasfasern umfasst, die in der Umhüllung angeordnet sind, wobei die Umhüllung mindestens einen Laser-Eindruck (8; 18; 108, 109; 118, 119, 120, 121; 128, 129) umfasst, der lokal eine Schwächungszone der Umhüllung bildet, um ein Öffnen der Umhüllung im Bereich dieser Schwächungszone ohne Werkzeug zu gestatten.

2. Hülse nach Anspruch 1, bei der der Laser-Eindruck (8; 18; 108, 109; 118, 119, 120, 121; 128, 129) derart geformt ist, dass er eine Identifizierungsmarke der Hülse bildet.

3. Hülse nach Anspruch 1 oder Anspruch 2, bei der der Eindruck eine Höhe gleich mindestens 30% der Dicke der Umhüllung (5; 15; 105, 115, 125) aufweist.

4. Hülse nach Anspruch 2, bei der der Eindruck eine Höhe zwischen 30% und 60% der Dicke der Umhüllung (5; 15; 105, 115, 125) aufweist.

5. Hülse nach einem der vorhergehenden Ansprüche, bei der die Umhüllung (5; 15; 105, 115, 125) eine Dicke hat, die kleiner als 0,5 Millimeter ist.

6. Hülse nach dem vorhergehenden Anspruch, bei dem die Umhüllung (5) eine Dicke zwischen 0,01 und 0,5 Millimetern hat.

7. Hülse nach einem der vorhergehenden Ansprüche, bei der der Laser-Eindruck (8, 18; 108, 109; 118, 119, 120, 121; 128, 129) mindestens einmal entlang der axialen Richtung (X) auf der Hülse (4; 14; 104, 114, 124) mit einem vorbestimmten Abstand zum ersten Laser-Eindruck identisch reproduziert ist.

8. Hülse nach einem der vorhergehenden Ansprüche, umfassend mindestens einen ersten Laser-Eindruck, der eine Schwächungszone der Umhüllung bildet, um ein Öffnen der Umhüllung im Bereich dieser Schwächungszone ohne Werkzeug zu gestatten, und einen sich von dem ersten Laser-Eindruck unterscheidenden zweiten Laser-Eindruck, der eine Schwächungszone der Umhüllung bildet, um ein Öffnen der Umhüllung im Bereich dieser Schwächungszone ohne Werkzeug zu gestatten, wobei der erste Eindruck und der zweite Eindruck voneinander in axialer Richtung um einen vorbestimmten Abstand getrennt sind.

9. Hülse nach Anspruch 7 oder Anspruch 8, bei der jeder Eindruck (8; 18; 108, 109; 118, 119, 120, 121; 128, 129) von dem anderen in axialer Richtung um einen Abstand zwischen 0,01 und 1,5 Metern getrennt ist.

10. Hülse nach einem der vorhergehenden Ansprüche, bei der die Umhüllung (5; 15; 105, 115, 125) derart gewählt ist, dass sie die Farbe ändert, wenn sie einer Laserbestrahlung ausgesetzt ist.

11. Hülse nach einem der vorhergehenden Ansprüche, bei der die Hülse ein Mikromodul ist.

12. Kabel, umfassend einen äußeren Schlauch (2) und mindestens eine Hülse (4; 14; 104, 114, 124) nach einem der vorhergehenden Ansprüche, die im Inneren des äußeren Schlauchs angeordnet ist.

13. Verfahren zum Herstellen einer Hülse nach einem der Ansprüche 1 bis 11, umfassend einen Schritt des Extrudierens einer Zusammensetzung zwecks Bildens der Umhüllung (5; 15; 105, 115, 125) und einen Schritt des Lasermarkierens der Umhüllung zwecks Erzeugens des Laser-Eindrucks (8; 18; 108, 109; 118, 119, 120, 121; 128, 129).

14. Herstellungsverfahren nach Anspruch 13, bei dem man die Umhüllung (5; 15; 105, 115, 125) mit dem Laser unmittelbar nach dem Extrudierschritt markiert.

15. Herstellungsverfahren nach einem der Ansprüche 13 oder 14, bei dem die Zusammensetzung eine auf Laserstrahlung reaktive Komponente umfasst.

## Claims

1. Sleeve extending in an axial direction (X) comprising at least one casing (5; 15; 105, 115, 125) and at least a plurality of optical fibres arranged in the casing, the casing comprising at least one laser mark (8; 18; 108, 109; 118, 119, 120, 121; 128, 129) locally forming a weakened zone of the casing to allow opening of the casing in this weakened zone without the use of tools.

2. Sleeve according to Claim 1, in which the laser mark (8; 18; 108, 109; 118, 119, 120, 121; 128, 129) is shaped so as to form an identification marking for the sleeve.

3. Sleeve according to claim 1 or claim 2, in which the mark has a height equal to at least 30% of the thickness of the casing (5; 15; 105, 115, 125).

4. Sleeve according to Claim 2, in which the mark has a height equal to between 30% and 60% of the thickness of the casing (5; 15; 105, 115, 125).

5. Extending sleeve according to any one of the preceding claims, in which the casing (5; 15; 105, 115, 125) has a thickness of less than 0.5 millimetre.

6. Extending sleeve according to the preceding claim, in which the casing (5) has a thickness of between 0.01 and 0.5 millimetre.

7. Sleeve according to any one of the preceding claims, in which the laser mark (8; 18; 108, 109; 118, 119, 120, 121; 128, 129) is identically reproduced at least once along the axial direction (X) on the sleeve (4; 14; 104, 114, 124) at a predetermined distance from the first laser mark.

8. Sleeve according to any one of the preceding claims, comprising at least a first laser mark forming a weakened zone of the casing to allow opening of the casing in this weakened zone without the use of tools and a second laser mark, different from the first mark, forming a weakened zone of the casing to allow opening of the casing in this weakened zone without the use of tools, the first mark and the second mark being separated from each other in the axial direction by a predetermined distance.

9. Sleeve according to Claim 7 or Claim 8, in which each mark (8; 18; 108, 109; 118, 119, 120, 121; 128, 129) is separated from the other in the axial direction by a distance between 0.01 and 1.5 meters.

10. Sleeve according to any one of the preceding claims, in which the casing (5; 15; 105, 115, 125) is chosen so that it changes colour when it is subjected to laser radiation.

11. Sleeve according to any one of the preceding claims, in which the sleeve is a micromodule.

12. Cable comprising an outer jacket (2) and at least one sleeve (4; 14; 104, 114, 124) according to any one of the preceding claims arranged inside the outer jacket.

13. Method of producing a sleeve according to any one of claims 1 to 11, including a step of extruding a composition to form the casing (5; 15; 105, 115, 125) and a step of laser marking of the casing to create the laser mark (8; 18; 108, 109; 118, 119, 120, 121; 128, 129).

14. Production method according to Claim 13, in which the casing (5; 15; 105, 115, 125) is laser marked immediately after the extrusion step.

15. Production method according to either one of claims 13 or 14, in which the composition includes a component reactive to the laser radiation.
